# EUROPEAN PATENT APPLICATION

(11) **EP 2 615 452 A1**
(43) Date of publication of application: **17.07.2013**
(21) Application number: 11823668.6
(22) Date of filing: 09.09.2011
(51) Int. Cl.: G01N 30/88

(54) **METHOD FOR SEPARATING WATER-SOLUBLE BIOLOGICAL MATERIAL**

(30) Priority: 09.09.2010 JP 2010202070
(71) Applicant: Daicel Corporation, Osaka-shi, Osaka 530-0001 (JP)
(72) Inventor: OHNISHI, Atsushi, Hyogo 6711283 (JP); HAMASAKI, Ryota, Hyogo 6711283 (JP)
(74) Representative: Grünecker, Kinkeldey, Stockmair & Schwanhäusser
(86) International application number: PCT/JP2011/070599
(87) International publication number: WO 2012/033194

(57) **Abstract**

Provided is a novel method for separating water-soluble biological substances. A separating agent is composed by bonding a polysaccharide such as cellulose or amylose to the surface of a carrier by chemical bonding, and water-soluble biological substances are separated from a mixture of two or more types of water-soluble biological substances by chromatography using the separating agent.

## Description

### TECHNICAL FIELD

The present invention relates to a method for separating water-soluble biological substances.

### BACKGROUND ART

Since biological substances having physiological activity, such as substances in the manner of sugars, nucleic acid compounds, amino acids, proteins, vitamins or acidic compounds demonstrate effective effects in the body, nearly all of these substances are water-soluble, and as a result thereof, chromatographic methods under reverse phase conditions are frequently applied to analyze nearly all of these substances.
On the other hand, there have recently been numerous reports describing attempts to chromatographically separate and analyze these biological water-soluble physically active substances by aqueous normal phase chromatography using a mobile phase containing several percent to 40% of water (see, for example, Non-Patent Document 1). This aqueous normal phase chromatography is referred to as hydrophilic interaction liquid chromatography (HILIC), and is considered to provide an analysis mode easily applicable to LC-MS since it enables separation of compounds that were weakly retained and difficult to separate by reverse phase chromatography, and uses only a volatile organic solvent and water for the mobile phase without using a highly concentrated salt or ion pair reagent.

Although the majority of these HILIC separation columns use a silica, amine-modified or amide-modified separating agent in most cases, and examples of other columns include polyamine, polyacrylic acid, polyvinyl, cyclodextrin and zwitterionic columns, there is a need for an HILIC separating agent capable of more effective separation during separation and analysis of a diverse range of biological compounds having various functional groups, structures and physical properties (see, for example, Non-Patent Document 2).

For example, chromatography technology such as high-performance liquid chromatography (HPLC) is known as a method for separating monosaccharides, polysaccharides and sugar-alcohols and the like. Examples of separating agents used to separate such sugars include separating agents obtained by chemically bonding polyacrylamide to silica gel and separating agents obtained by chemically bonding polyalkylene polyamine to silica gel (see, for example, Patent Documents 1 and 2). In addition, a known example of a method for separating sugars includes packing cellulose swollen with water into a column tube, and separating oligosaccharides by column chromatography using a mixture of water and alcohol as eluent (see, for example, Patent Document 3). On the other hand, a known example of a separating agent that uses a polysaccharide derivative such as cellulose is a separating agent for optical isomer separation obtained by chemically bonding a polysaccharide derivative of cellulose or amylose such as a dimethylphenyl carbamate derivative to silica gel (see, for example, Patent Document 4).

[Patent Document 1] Japanese Patent Publication No. 2504005
[Patent Document 2] Japanese Patent Publication No. 2558007
[Patent Document 3] Japanese Patent Publication No. 3885912
[Patent Document 4] Japanese Patent Publication No. 2751004

[Non-Patent Document 1] Journal of Chromatography A, 1994, Vol. 676, pp. 191-202
[Non-Patent Document 2] Journal of Separation Science, 2006, Vol. 29, pp. 1784-1821

### DISCLOSURE OF THE INVENTION

The present invention provides a novel method for separating water-soluble biological substances.

The inventors of the present invention found that a separating agent obtained by chemically bonding a polysaccharide to silica gel is superior for separating water-soluble biological substances into individual compounds, thereby leading to completion of the present invention.

Namely, the present invention provides a method for separating water-soluble biological substances from a mixture of two or more types of water-soluble biological substances by chromatography using a separating agent composed of a carrier and a polysaccharide bound to the surface of the carrier by chemical bonding.

In addition, the present invention provides a separating agent for separating water-soluble biological substances, including a carrier and a polysaccharide bound to the surface of the carrier by chemical bonding.

In addition, the present invention provides the above-mentioned method and separating agent, wherein the water-soluble biological substance is one or more types thereof selected from the group consisting of sugars, nucleic acid compounds, amino acids, water-soluble vitamins, acidic compounds having physiological activity and derivatives thereof, and oligopeptides.

In addition, the present invention provides the above-mentioned method and separating agent, wherein the polysaccharide is cellulose or amylose.

Since the present invention uses a separating agent previously not known to have the ability to separate water-soluble biological substances into individual compounds in the form of a separating agent composed of a carrier and a polysaccharide bound to the surface of the carrier by chemical bonding, it is able to provide a novel method for separating water-soluble biological substances.

### BRIEF DESCRIPTION OF THE DRAWINGS

FIG. 1 is a drawing showing a chromatogram obtained with an RI detector of separation of sugars by HPLC using a Separating Agent 1 of the examples;
FIG. 2 is a drawing showing a chromatogram obtained with a UV detector of separation of sugars by HPLC using a Separating Agent 1 of the examples;
FIG. 3 is a drawing showing a chromatogram obtained with an RI detector of separation of sugars by HPLC using a Separating Agent 2 of the examples;
FIG. 4 is a drawing showing a chromatogram obtained with a UV detector of separation of sugars by HPLC using a Separating Agent 2 of the examples;
FIG. 5 is a drawing showing a chromatogram obtained with a UV detector of separation of nucleic acid bases by HPLC using a Separating Agent 1 of the examples;
FIG. 6 is a drawing showing a chromatogram obtained with a UV detector of separation of nucleic acid bases by HPLC using a Separating Agent 2 of the examples;
FIG. 7 is a drawing showing a chromatogram obtained with a UV detector of separation of nucleosides by HPLC using a Separating Agent 1 of the examples;
FIG. 8 is a drawing showing a chromatogram obtained with a UV detector of separation of nucleosides by HPLC using a Separating Agent 2 of the examples;
FIG. 9 is a drawing showing a chromatogram obtained with a UV detector of separation of water-soluble vitamins by HPLC using a Separating Agent 1 of the examples;
FIG. 10 is a drawing showing a chromatogram obtained with a UV detector of separation of water-soluble vitamins by HPLC using a Separating Agent 2 of the examples;
FIG. 11 is a drawing showing a chromatogram obtained with a UV detector of separation of amino acids by HPLC using a Separating Agent 1 of the examples;
FIG. 12 is a drawing showing a chromatogram obtained with a UV detector of separation of amino acids by HPLC using a Separating Agent 2 of the examples;
FIG. 13 is a drawing showing a chromatogram obtained with a UV detector of separation of acidic compounds having physiological activity and derivatives thereof by HPLC using a Separating Agent 1 of the examples;
FIG. 14 is a drawing showing a chromatogram obtained with a UV detector of separation of acidic compounds having physiological activity and derivatives thereof by HPLC using a Separating Agent 2 of the examples;
FIG. 15 is a drawing showing a chromatogram obtained with a UV detector of separation of a mixture of nucleic acid bases and nucleosides by HPLC using a Separating Agent 2 of the examples;
FIG. 16 is a drawing showing a chromatogram obtained with a UV detector of separation of nucleic acid bases by HPLC using a commercially available ODS column;
FIG. 17 is a drawing showing a chromatogram obtained with a UV detector of separation of nucleosides by HPLC using a commercially available ODS column;
FIG. 18 is a drawing showing a chromatogram obtained with a UV detector of separation of water-soluble vitamins by HPLC using a commercially available ODS column;
FIG. 19 is a drawing showing a chromatogram obtained with a UV detector of separation of amino acids by HPLC using a commercially available ODS column;
FIG. 20 is a drawing showing a chromatogram obtained with a UV detector of separation of an acidic compounds having physiological activity and derivatives thereof by HPLC using a commercially available ODS column;
FIG. 21 is a drawing showing a chromatogram obtained with a UV detector of separation of a mixture of dipeptides and tripeptides by HPLC using a Separating Agent 1 of the examples;
FIG. 22 is a drawing showing a chromatogram obtained with a UV detector of separation of a mixture of dipeptides and tripeptides by HPLC using a Separating Agent 2 of the examples; and
FIG. 23 is a drawing showing a chromatogram obtained with a UV detector of separation of a mixture of dipeptides and tripeptides by HPLC using a commercially available ODS column.

### MODE FOR CARRYING OUT THE INVENTION

In the present invention, a separating agent for water-soluble biological substances is used that is composed of a carrier and a polysaccharide bound to the surface of the carrier by chemical bonding. In the method for separating water-soluble biological substances of the present invention, individual water-soluble biological substances are separated from a mixture of two or more types of water-soluble biological substances by chromatography using the above-mentioned separating agent of the present invention.

A carrier normally used as a carrier of a separating agent for chromatography can be used for the above-mentioned carrier. The above-mentioned carrier is preferably a porous carrier. Examples of such a porous carrier include porous inorganic carriers and porous organic carriers. Examples of porous inorganic carriers include silica gel, diatomaceous earth, porous glass, hydroxyapatite, alumina, titanium oxide and magnesia. Examples of porous organic carriers include polyacrylamide and polyacrylate.

The above-mentioned carrier can be used in a form that is normally used in column chromatography. Examples of such forms include particles packed into a column tube, porous cylindrical bodies contained in a column tube, and a porous film used in film separation. The above-mentioned carrier is preferably silica gel from the viewpoints of universality and ease of preparing the separating agent. The particle diameter of the silica gel is preferably 1 µm to 1,000 µm and more preferably 2 µm to 100 µm from the viewpoint of balance between the resulting peak theoretical plate number and pressure loss. The mean pore size of the silica gel is preferably 1 nm to 100 µm and more preferably 2 nm to 500 nm from the viewpoint of balance between specific surface area and penetration of high molecular weight compounds into the pores.

A polysaccharide having a reducing terminal can be used for the above-mentioned polysaccharide. Such a polysaccharide can be selected from among synthetic polysaccharides and naturally-occurring polysaccharides. A polysaccharide having a highly regular bonding structure is preferable for the above-mentioned polysaccharide from the viewpoint of recognizing the shape of the analysis target. Examples of such polysaccharides include α-1,4-glucan (amylose), β-1,4-glucan (cellulose), α-1,6-glucan (dextran), β-1,6-glucan (pustulan), α-1,3-glucan, β-1,3-glucan (such as curdlan or sizofiran), α-1,2-glucan, β-1,2-glucan, β-1,4-chitosan, β-1,4-N-acetylchitosan (chitin), β-1,4-galactan, α-1,6-galactan, β-1,2-fructan (inulin), β-2,6-fructan (levan), β-1,4-xylan, β-1,3-xylan, β-1,4-mannan, α-1,6-mannan, pullulan, agarose, alginic acid and starch having a high amylose content.

The above-mentioned polysaccharide is preferably cellulose, amylose, β-1,4-chitosan, chitin, β-1,4-mannan, β-1,4-xylan, inulin or curdlan, and more preferably cellulose or amylose, from the viewpoint of enabling a highly pure polysaccharide to be easily obtained.

The number average degree of polymerization of the above-mentioned polysaccharide is preferably 11 or more from the viewpoint of constructing a regular higher-order structure by repeated polymerization of monomer. Although there are is no particular upper limit for the number average degree of polymerization of the polysaccharide, a value of 500 or less is preferable from the viewpoint of handling ease.

In the present invention, the polysaccharide is bound to the carrier by chemical bonding. The polysaccharide may be directly bound to the surface of the carrier by chemical bonding such as covalent bonding or ionic bonding, or may be bound via a spacer molecule immobilized on the surface of the carrier. Such a spacer molecule can be suitably selected according to the type of carrier.

For example, a compound having a first functional group that bonds with a silanol group on the surface of silica gel and a second functional group that chemically bonds with a reducing terminal of the polysaccharide can be used as the above-mentioned spacer molecule for the silica gel. Examples of the first functional group include a silane group and silanoxy group. Examples of the second functional group include a vinyl group, amino group, hydroxyl group, carboxyl group, aldehyde group, isocyanate group, thiocyanate group, isothiocyanate group, thiol group, silanol group, epoxy group, ether group, ester group, amide group and halogen atom.

The above-mentioned spacer molecule is preferably a compound that contains an amino group for the first functional group and is more preferably a primary amine compound. Examples of such spacer molecules that can be used include commercially available silane coupling agents and compounds in which an amino group has been introduced into these silane coupling agents.

The above-mentioned separating agent can be obtained by, for example, surface treatment of the carrier with a spacer molecule or chemically bonding a surface-treated carrier and a polysaccharide.

In the case the carrier is silica gel, for example, surface treatment of the carrier with the spacer molecule can be carried out by chemically bonding a silane coupling agent having an amino group, such as 3-aminopropyltriethoxysilane, to the surface of the silica gel using a known method.

Chemical bonding between the surface-treated carrier and a polysaccharide can be carried out by reductive amination by, for example, dissolving a polysaccharide having a reducing terminal in a solvent such as dimethylsulfoxide (DMSO) or lithium chloride-dimethylacetoamide (DMA/LiCl), adding a reducing agent, and reacting for 12 hours at 50°C to 80°C to covalently bond the amino groups present on the surface of the above-mentioned surface-treated silica gel to the reducing terminals of the polysaccharide.

A suitable compound can be selected from among known reducing agents for the above-mentioned reducing agent, and examples thereof include NaBH₄ (sodium borohydride), NaBH₃CN (sodium cyanoborohydride), and borane compounds such as borane-pyridine complex, borane-dimethylamine complex or borane trimethylamine. The reductive amination may be carried out by further adding acetic acid to the reaction system under neutral conditions in the vicinity of pH 6 to pH 8.

Although there are no particular limitations thereon, normally the amount of polysaccharide used to form the separating agent is preferably about 5% by weight to 50% by weight based on the amount of carrier used. In addition, the separating agent is preferably subjected to end capping treatment from the viewpoint of inhibiting the effect of residual silanol groups. End capping can be carried out according to a known method, and as a result of this treatment, the separation ability of the separating agent can be further stabilized or improved.

A "water-soluble" substance as referred to in the present invention refers to that which dissolves in water when water is used as a solvent, and the above-mentioned water-soluble biological substances separated in the present invention include polar molecule crystals having a comparatively low molecular weight or multiple hydrogen bonds, and those that donate or accept a proton in an aqueous solution. Moreover, "water-soluble" as referred to in the present invention refers to having solubility in water of 0.001% (10 ppm) or more. The molecular weight of the water-soluble biological substances includes a molecular weight of roughly 30 to 10,000. The "water-soluble biological substances" as referred to in the present invention include water-soluble substances that compose the body, water-soluble substances used in metabolism by the body, and water-soluble substances having physiological activity.
Specific examples of such water-soluble biological substances include nucleic acid compounds, including nucleic acid bases and nucleosides, water-soluble vitamins, amino acids, acidic compounds having physiological activity and derivatives thereof, and oligopeptides.
Only those water-soluble biological substances serving as analysis targets that belong to the same categories listed below can be targeted for analysis, or mixtures in which those substances belonging to different categories are contained can be targeted for analysis.

Examples of the above-mentioned nucleic acid compounds separated in the present invention include nucleic acid bases, including thymine, uracil, adenine, cytosine and guanine, and nucleosides in the manner of ribonucleosides, including 5-methyluridine, uridine, adenosine, cytidine and guanosine, and deoxyribonucleosides, including thymidine, deoxyuridine, deoxyadenosine, deoxycytidine and deoxyguanosine.

Examples of the above-mentioned water-soluble vitamins separated in the present invention include vitamin C, vitamin B1, vitamin B2, vitamin B3 including niacin and nicotinamide, vitamin B5, vitamin B6, vitamin B7, vitamin B9 and vitamin B12.

The above-mentioned amino acids separated in the present invention are preferably α-amino acids, and examples thereof that compose proteins include alanine, arginine, asparagine, aspartic acid, cysteine, glutamine, glutamic acid, glycine, histidine, isoleucine, leucine, lysine, methionine, phenylalanine, proline, serine, threonine, tryptophan, tyrosine and valine.

The above-mentioned acidic compounds having physiological activity and derivatives thereof separated in the present invention preferably have 1 to 500 carbon atoms and more preferably have 1 to 300 carbon atoms and a carboxyl group. "Physiological activity" as referred to in the present invention refers to that possessed by a substance that acts on a specific physiological regulatory function of the body.
Examples of the above-mentioned acidic compounds and derivatives thereof include pyridinecarboxylic acids and derivatives thereof in which an arbitrary hydrogen atom of the nitrogen-containing six-membered ring is substituted with a hydroxyl group, derivatives in which a carboxyl group is esterified with an alcohol having 1 to 3 carbon atoms, and derivatives in which an arbitrary hydrogen atom of the nitrogen-containing six-membered ring is substituted with a hydroxyl group and the carboxyl group is esterified. Specific examples include nicotinic acid, methyl nicotinate, 6-hydroxynicotinic acid and 5-hydroxynicotinic acid.
In addition, in the case of fatty acids and unsaturated fatty acids in the manner of formic acid, acetic acid, propionic acid, butyric acid, isobutyric acid, valeric acid, isovaleric acid, caproic acid, enanthic acid, caprylic acid, pelargonic acid, capric acid, lauric acid, myristic acid, pentadecylic acid, palmitic acid, margaric acid, stearic acid, oleic acid, linoleic acid, linolenic acid, tuberculostearic acid, arachidic acid, arachidonic acid, eicosapentaenoic acid, behenic acid, docosahexaenoic acid, lignoceric acid, cerotic acid, montanoic acid and mellisic acid, trans and cis isomers thereof are also specific examples of analysis targets.

Examples of the above-mentioned oligopeptides separated in the present invention preferably have 5 or fewer amino acid residues and are more preferably tripeptides or dipeptides. Examples of amino acid residues that compose the peptides include the above-mentioned α-amino acids.

Examples of the above-mentioned sugars separated in the present invention include monosaccharides such as glucose, xylose or fructose, disaccharides such as maltose, lactose or sucrose, and sugar-alcohols such as glycerol.

The above-mentioned separating agent can be used as a separating agent in chromatography that uses a particulate, cylindrical or film-like separating agent. Examples of such chromatography include gas chromatography, liquid chromatography, thin layer chromatography, simulated moving bed chromatography and supercritical fluid chromatography. These chromatographic methods can be carried out by ordinary methods with the exception of using the above-mentioned separating agent.

In these chromatographic methods, a liquid such as water or various types of solvents, or a known fluid such as a supercritical fluid or subcritical fluid, can be used for the mobile phase. For example, in the case of supercritical fluid chromatography, a supercritical fluid composed of supercritical carbon dioxide, a subcritical fluid composed of subcritical carbon dioxide, or a mixed fluid of supercritical carbon dioxide and an additive can be used for the mobile phase. Examples of the above-mentioned additive include alcohols having 1 to 8 carbon atoms, acetonitrile, acetone, tetrahydrofuran, chloroform, methylene chloride, acetic acid esters, tert-butyl methyl ether and water. One type or two or more types of additives may be used.

The chromatography that uses the above-mentioned separating agent can be used to analyze water-soluble biological substances in a sample or isolate a specific sugar from a mixture using a procedure similar to that of ordinary chromatography with the exception of carrying out under conditions suitable for separating water-soluble biological substances. Known conditions for separating water-soluble biological substances can be used as is, or conditions further derived from such known conditions can be used for the separation conditions of water-soluble biological substances.

### Examples

12 mL of dehydrated benzene and 1 mL of dehydrated pyridine were added to 10 g of silica gel preliminarily activated by vacuum-drying for 2 hours at 180°C (FUJI SILYSIA CHEMICAL LTD. , mean pore size: 50 nm, particle diameter: 5 µm) followed by the addition of 0.7 mL of 3-aminopropyltriethoxysilane and reacting for 12 hours at 90°C. After washing this surface-treated silica gel with methanol, acetone and hexane, the silica gel was vacuum-dried for 2 hours at 60°C to obtain a surface-treated silica gel in which aminopropyl groups were bound to the surface thereof.

A solution obtained by dissolving 1.0 g of amylose (average degree of polymerization: 160) in 8 mL of dehydrated DMSO was added to the resulting surface-treated silica gel, and a solution obtained by adding 30 mg of acetic acid to a solution obtained by dissolving 150 mg of NaBH₃CN in 5 mL of dehydrated DMSO was added to the resulting slurry, followed by reacting for 12 hours at 50°C in the presence of nitrogen to chemically bond amino groups of the surface-treated silica gel to reducing terminals of the amylose and obtain amylose-bonded silica gel.

The resulting amylose-bonded silica gel was filtered using a G4 glass filter, and the residue was washed with DMSO, tetrahydrofuran, methanol, acetone and hexane to remove unbound amylose and the like from the amylose-bonded silica gel, followed by vacuum-drying for 2 hours at 60°C to obtain a Separating Agent 1 obtained by bonding amylose to the surface of silica gel by chemical bonding. Elementary analysis values of the Separating Agent 1 consisted of C: 4.29%, H: 0.90% and N: 0.22%.

In addition, a solution obtained by dissolving 1.0 g of cellulose (manufactured by MERCK, average degree of polymerization: 200) in 21 mL of dehydrated DMA/LiCl was added to the above-mentioned surface-treated silica gel, and a solution obtained by adding 30 mg of acetic acid to a solution obtained by dissolving 150 mg of NaBH₃CN in 5 mL of dehydrated DMA/LiCl was added to the resulting slurry, followed by reacting for 36 hours at 50°C in the presence of nitrogen to chemically bond amino groups of the surface-treated silica gel to reducing terminals of the cellulose and obtain cellulose-bonded silica gel.

The resulting cellulose-bonded silica gel was filtered using a G4 glass filter, and the residue was washed with DMA/LiCl, tetrahydrofuran, methanol, acetone and hexane to remove unbound cellulose and the like from the cellulose-bonded silica gel, followed by vacuum-drying for 2 hours at 60°C to obtain a Separating Agent 2 obtained by bonding cellulose to the surface of silica gel by chemical bonding. Elementary analysis values of the Separating Agent 2 consisted of C: 2.12%, H: 0.56% and N: 0.15%.

Separating Agents 1 and 2 were respectively packed into a stainless steel empty column having an inner diameter of 0.46 cm and length of 25 cm by slurry packing to respectively obtain a Column 1 containing the packed Separating Agent 1 and a Column 2 containing the packed Separating Agent 2. Furthermore, PS10 and PS-20 Auto-Packing Systems manufactured by KYOTO CHROMATO were used to pack the separating agents into the columns.

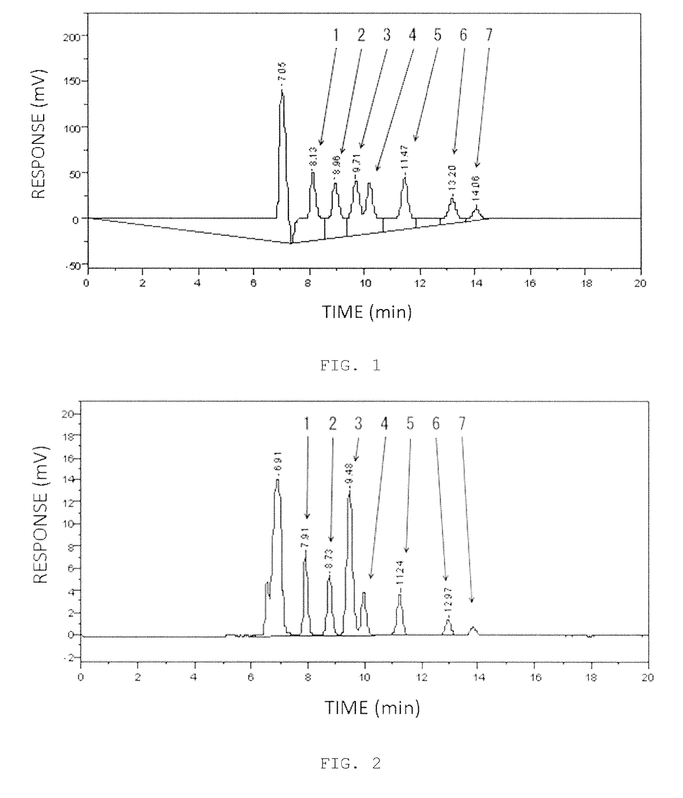

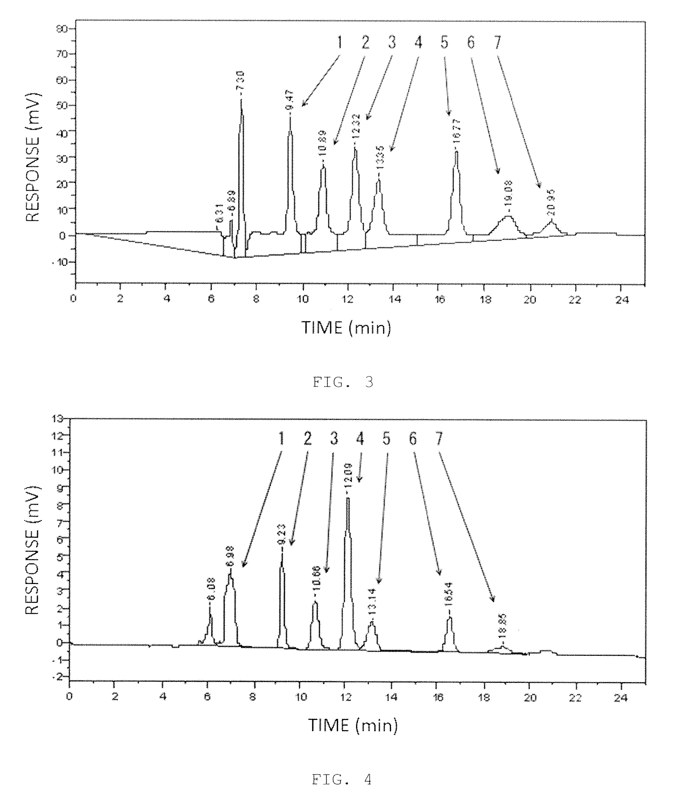

The ability of the Separating Agents 1 and 2 to separate a total of seven types of sugars consisting of glucose, xylose, fructose, glycerol, maltose, lactose and sucrose was evaluated by HPLC using these Columns 1 and 2. A solution obtained by dissolving the seven types of sugars in a mobile phase at a concentration of about 4, 000 ppm was used for the sample solution. A mixture of water and acetonitrile (water/acetonitrile = 25/75 (volume ratio)) was used for the mobile phase. The flow rate of the mobile phase was 0.5 mL/min, the column temperature was 25°C, the injected amount of sample solution was 20 µL, and an RI detector and UV detector were used for the detectors. The detection wavelength of the UV detector was 190 nm. A chromatogram of sugar separation with the Separating Agent 1 using an RI detector is shown in FIG. 1, a chromatogram of sugar separation with the Separating Agent 1 using a UV detector is shown in FIG. 2, a chromatogram of sugar separation with the Separating Agent 2 using an RI detector is shown in FIG. 3, and a chromatogram of sugar separation with the Separating Agent 2 using a UV detector is shown in FIG. 4.

### <Separation of Nucleic Acid Bases>

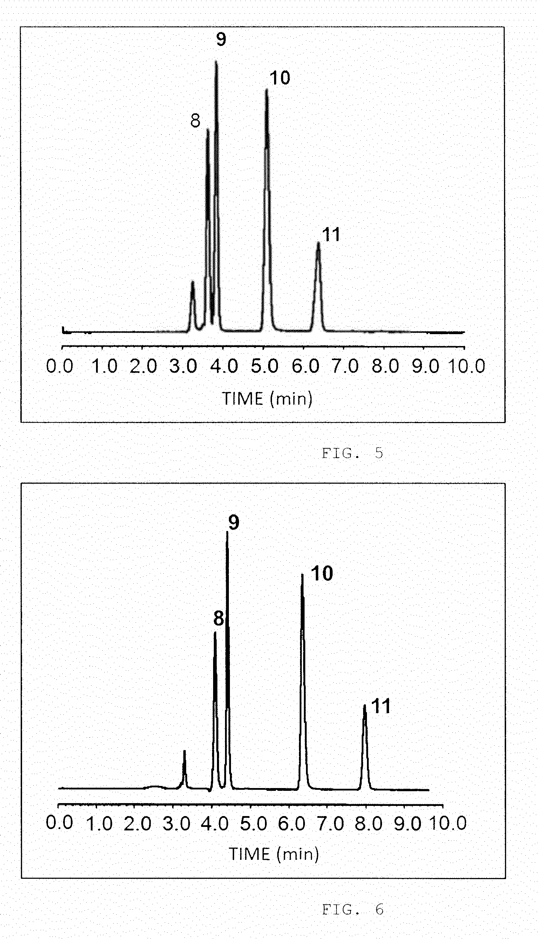

The ability of the Separating Agents 1 and 2 to separate a total of four types of nucleic acid bases consisting of thymine, uracil, adenine and cytosine was evaluated by HPLC using the above-mentioned Columns 1 and 2. The sample solution contained the four types of nucleic acid bases at a concentration of 50 ppm each. A mixture of 10 mM aqueous ammonium acetate and acetonitrile (10 mM AcONH₄aq/CH₃CN = 10/90 (volume ratio)) was used for the mobile phase. The flow rate of the mobile phase was 1.0 mL/min, the column temperature was 25°C, the injected amount of sample solution was 1 µL, and a UV detector (254 nm) was used for the detector. A chromatogram of nucleic acid base separation with the Separating Agent 1 is shown in FIG. 5, and a chromatogram of nucleic acid base separation with the Separating Agent 2 is shown in FIG. 6. The elution order was the same for Separating Agents 1 and 2.

### (Separation of Nucleic Acid Bases: Comparative Example)

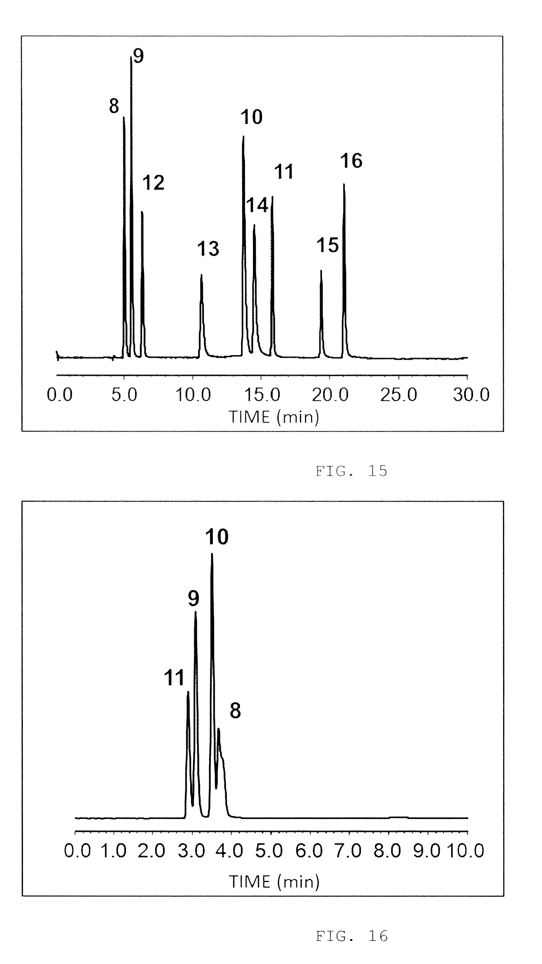

The ability to separate a total of four types of nucleic acid bases consisting of thymine, uracil, adenine and cytosine with an ODS column was evaluated by HPLC using a commercially available ODS column (trade name: L Column, Chemicals Evaluation and Research Institute, Japan). The sample solution contained the four types of nucleic acid bases at a concentration of 250 ppm each. A mixture of 10 mM aqueous ammonium acetate and acetonitrile (10 mM AcONH₄aq/CH₃CN = 90/10 (volume ratio)) was used for the mobile phase. The flow rate of the mobile phase was 1.0 mL/min, the column temperature was 25°C, the injected amount of sample solution was 1 µL, and a UV detector (254 nm) was used for the detector. A chromatogram of nucleic acid base separation with the ODS column is shown in FIG. 16. The ODS column is unable to retain nucleic acid base compounds.

### <Separation of Nucleosides>

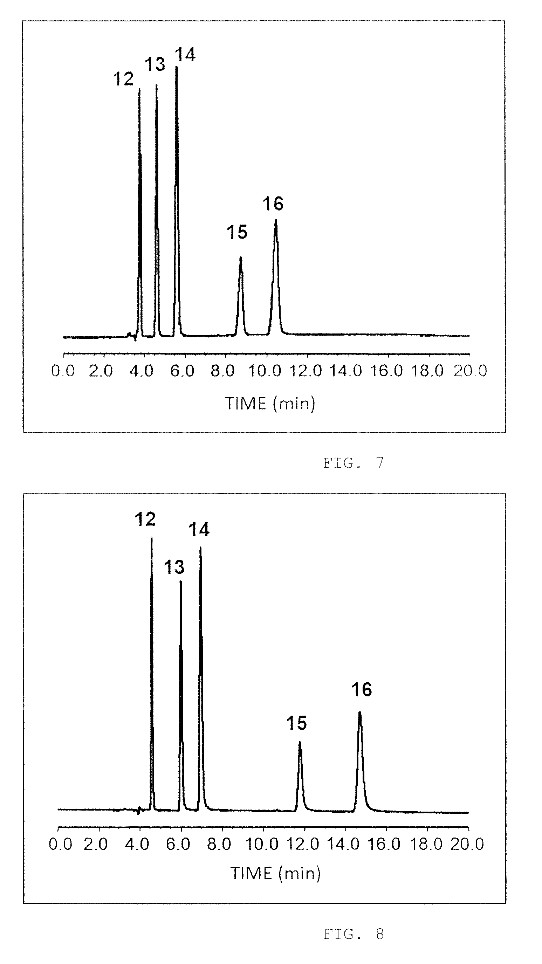

The ability of the Separating Agents 1 and 2 to separate nucleosides consisting of thymidine, uridine, adenosine, cytidine and guanosine was evaluated by HPLC using the above-mentioned Columns 1 and 2. The sample solution contained the five types of nucleosides at a concentration of 200 ppm each. A mixture of 10 mM aqueous ammonium acetate and acetonitrile (10 mM AcONH₄aq/CH₃CN = 10/90 (volume ratio)) was used for the mobile phase. The flow rate of the mobile phase was 1.0 mL/min, the column temperature was 25°C, the injected amount of sample solution was 1 µL, and a UV detector (254 nm) was used for the detector. A chromatogram of nucleoside separation with the Separating Agent 1 is shown in FIG. 7, and a chromatogram of nucleoside separation with the Separating Agent 2 is shown in FIG. 8. The elution order was the same for Separating Agents 1 and 2.

### (Separation of Nucleosides: Comparative Example)

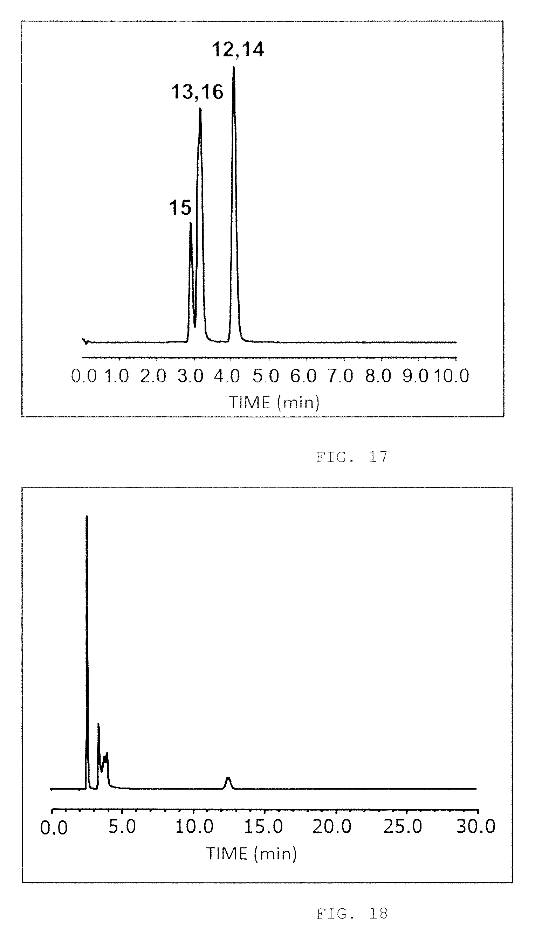

The ability to separate nucleosides consisting of thymidine, uridine, adenosine, cytidine and guanosine with an ODS column was evaluated by HPLC using a commercially available ODS column (trade name: L Column, Chemicals Evaluation and Research Institute, Japan). The sample solution contained the five types of nucleosides at a concentration of 200 ppm each. A mixture of 10 mM aqueous ammonium acetate and acetonitrile (10 mM AcONH₄aq/CH₃CN = 10/90 (volume ratio)) was used for the mobile phase. The flow rate of the mobile phase was 1.0 mL/min, the column temperature was 25°C, the injected amount of sample solution was 1 µL, and a UV detector (254 nm) was used for the detector. A chromatogram of nucleoside separation with the ODS column is shown in FIG. 17. The ODS column is unable to retain nucleosides.

### <Example of Separation of Water-Soluble Vitamins>

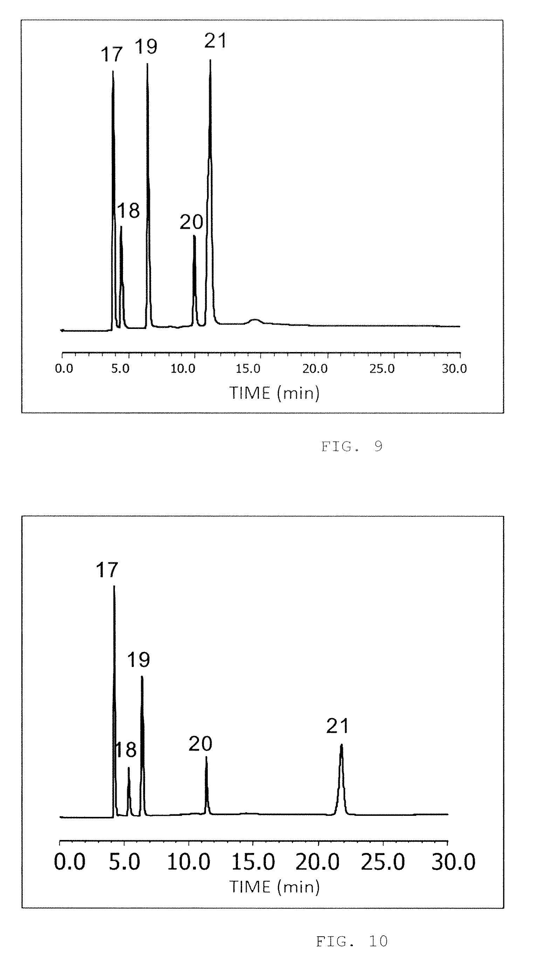

The ability of the Separating Agents 1 and 2 to separate water-soluble vitamins consisting of nicotinamide, vitamin B6, vitamin B1, vitamin B12 and vitamin C was evaluated by HPLC using the above-mentioned Columns 1 and 2. The sample solution contained the five types of water-soluble vitamins at a concentration of 160 ppm each. A mixture of 10 mM aqueous ammonium acetate and acetonitrile (Liquid A: 10 mM AcONH₄aq, Liquid B: CH₃CN, Liquid B: 0 minutes to 10 minutes (90% → 50%), 10.01 minutes to 30 minutes (50%)) was used for the mobile phase. The flow rate of the mobile phase was 1.0 mL/min, the column temperature was 25°C, the injected amount of sample solution was 5 µL, and a UV detector (254 nm) was used for the detector. A chromatogram of water-soluble vitamin separation with the Separating Agent 1 is shown in FIG. 9, and a chromatogram of water-soluble vitamin separation with the Separating Agent 2 is shown in FIG. 10. The elution order was the same for Separating Agents 1 and 2.

### (Separation of Water-Soluble Vitamins: Comparative Example)

The ability to separate water-soluble vitamins consisting of nicotinamide, vitamin B6, vitamin B1, vitamin B12 and vitamin C with an ODS column was evaluated by HPLC using a commercially available ODS column (trade name: L Column, Chemicals Evaluation and Research Institute, Japan). The sample solution contained the five types of water-soluble vitamins at a concentration of 160 ppm each. A mixture of 10 mM aqueous ammonium acetate and acetonitrile (10 mM AcONH₄aq/CH₃CN = 90/10 (volume ratio)) was used for the mobile phase. The flow rate of the mobile phase was 1.0 mL/min, the column temperature was 25°C, the injected amount of sample solution was 3 µL, and a UV detector (254 nm) was used for the detector. A chromatogram of nucleoside separation with the ODS column is shown in FIG. 18. The ODS column is unable to retain water-soluble vitamins.

### <Separation of Amino Acids>

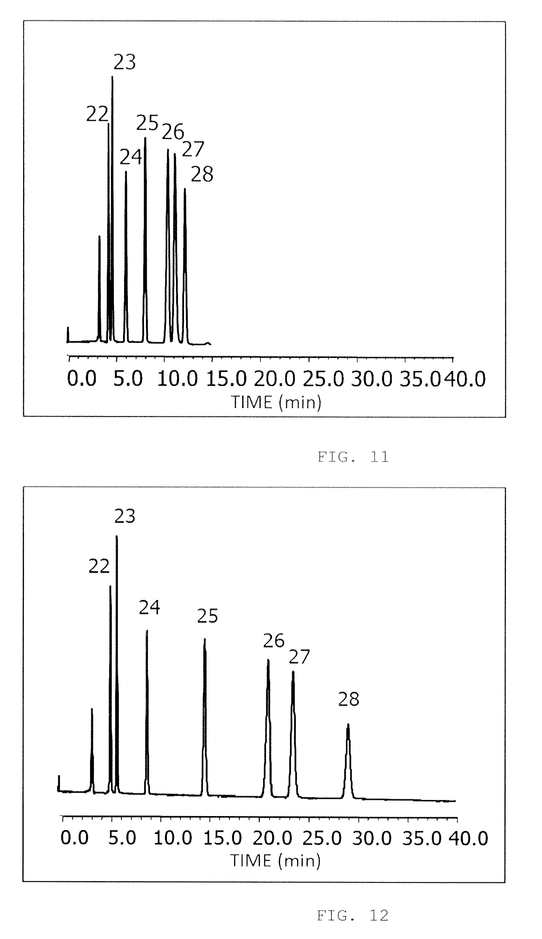

The ability of the Separating Agents 1 and 2 to separate amino acids consisting of tryptophan, leucine, proline, alanine, glutamic acid, aspartic acid and serine was evaluated by HPLC using Columns 1 and 2. The sample solution contained tryptophan at a concentration of 8 ppm and the other six types of amino acids at a concentration of 800 ppm each. A mixture of 20 mM phosphate buffer (pH = 6.2) and acetonitrile (20 mM H₃PO₄ (pH = 6.2) buffer/CH₃CN = 25/75 (volume ratio)) was used for the mobile phase. The flow rate of the mobile phase was 1.0 mL/min, the column temperature was 40°C, the injected amount of sample solution was 5 µL, and a UV detector (200 nm) was used for the detector. A chromatogram of amino acid separation with the Separating Agent 1 is shown in FIG. 11, and a chromatogram of amino acid separation with the Separating Agent 2 is shown in FIG. 12. The elution order was the same for Separating Agents 1 and 2.

### (Separation of Amino Acids: Comparative Example)

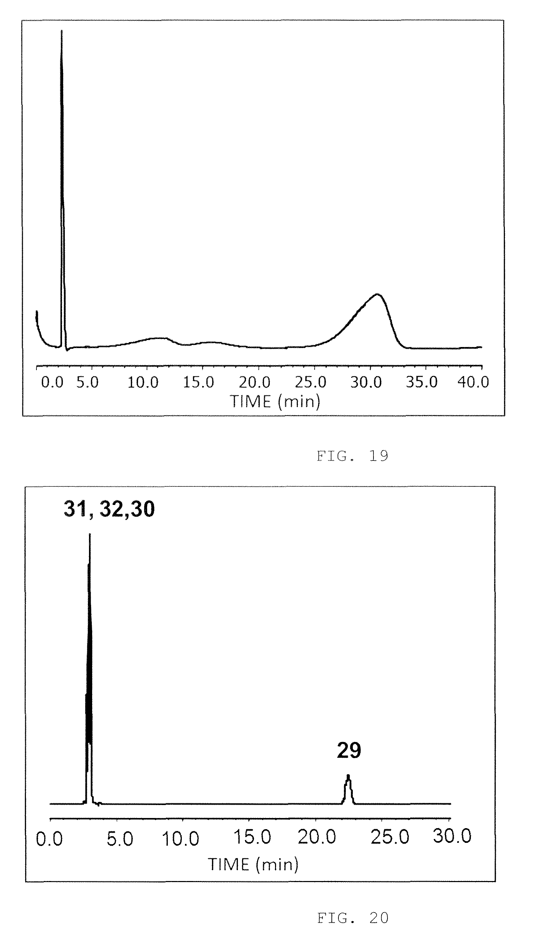

The ability to separate amino acids consisting of tryptophan, leucine, proline, alanine, glutamic acid, aspartic acid and serine with an ODS column was evaluated by HPLC using a commercially available ODS column (trade name: L Column, Chemicals Evaluation and Research Institute, Japan). The sample solution contained tyrosine at a concentration of 8 ppm and the other six types of amino acids at a concentration of 800 ppm. A mixture of 20 mM phosphate buffer (pH = 6.2) and acetonitrile (20 mM H₃PO₄ (pH = 6.2) buffer/CH₃CN = 25/75 (volume ratio)) was used for the mobile phase. The flow rate of the mobile phase was 1.0 mL/min, the column temperature was 40°C, the injected amount of sample solution was 5 µL, and a UV detector (200 nm) was used for the detector. A chromatogram of amino acid separation with the ODS column is shown in FIG. 19. The ODS column is unable to retain amino acids.

### <Separation of Acidic Compounds having Physiological Activity and Derivatives Thereof>

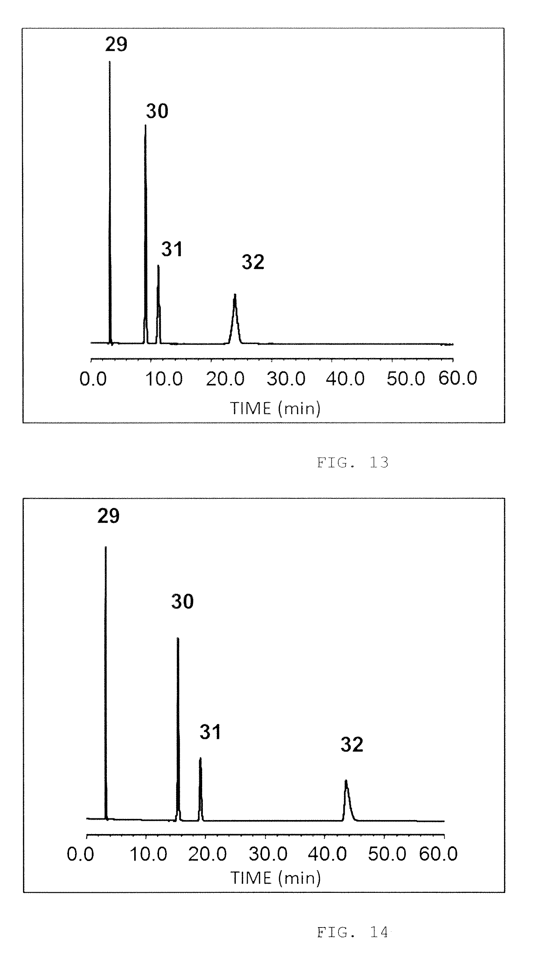

The ability of the Separating Agents 1 and 2 to separate methyl nicotinate, nicotinic acid, 6-hydroxynicotinic acid and 5-hydroxynicotinic acid was evaluated by HPLC using Columns 1 and 2. The sample solution contained methyl nicotinate at a concentration of 100 ppm and the other acidic compounds having physiological activity and derivatives thereof at a concentration of 250 ppm. A mixture of 10 mM ammonium acetate and acetonitrile (10 mM AcONH₄/CH₃CN = 10/90 (volume ratio)) was used for the mobile phase. The flow rate of the mobile phase was 1.0 mL/min, the column temperature was 40°C, the injected amount of sample solution was 5 µL, and a UV detector (220 nm) was used for the detector. A chromatogram of separation of acidic compounds having physiological activity and derivatives thereof with the Separating Agent 1 is shown in FIG. 13, and a chromatogram of separation of acidic compounds having physiological activity and derivatives thereof with the Separating Agent 2 is shown in FIG. 14. The elution order was the same for Separating Agents 1 and 2.

### (Separation of Acidic Compounds having Physiological Activity and Derivatives Thereof: Comparative Example)

The ability to separate methyl nicotinate, nicotinic acid, 6-hydroxynicotinic acid and 5-hydroxynicotinic acid with an ODS column was evaluated by HPLC using a commercially available ODS column (trade name: L Column, Chemicals Evaluation and Research Institute, Japan). The sample solution contained methyl nicotinate at a concentration of 100 ppm and the other acidic compounds having physiological activity and derivatives thereof at a concentration of 250 ppm. A mixture of 10 mM ammonium acetate and acetonitrile (10 mM AcONH₄/CH₃CN = 90/10 (volume ratio)) was used for the mobile phase. The flow rate of the mobile phase was 1.0 mL/min, the column temperature was 25°C, the injected amount of sample solution was 5 µL, and a UV detector (220 nm) was used for the detector. A chromatogram of amino acid separation with the ODS column is shown in FIG. 20. The ODS column is unable to retain acidic compounds having physiological activity and derivatives thereof.

### <Separation of Mixture of Nucleic Acid Bases and Nucleosides>

The ability of the Separating Agent 2 to separate a total of nine compounds including four types of nucleic acid bases consisting of thymine, uracil, adenine and cytosine and five types of nucleosides consisting of thymidine, uridine, adenosine, cytidine and guanosine was evaluated by HPLC using Column 2. The sample solution contained the four types of nucleic acid bases at a concentration of 100 ppm each and the five types of nucleosides at a concentration of 120 ppm each. A mixture of 10 mM aqueous ammonium acetate and acetonitrile (Liquid A: 10 mM AcONH₄aq, Liquid B: CH₃CN, Liquid B: 0 minutes to 20 minutes (95% → 70%), 20.01 minutes to 30 minutes (70%)) was used for the mobile phase. The flow rate of the mobile phase was 1.0 mL/min, the column temperature was 25°C, the injected amount of sample solution was 1 µL, and a UV detector (254 nm) was used for the detector. A chromatogram of separation of the mixture of nucleic acid bases and nucleosides with the Separating Agent 2 is shown in FIG. 15.

### <Separation of Dipeptides and Tripeptides>

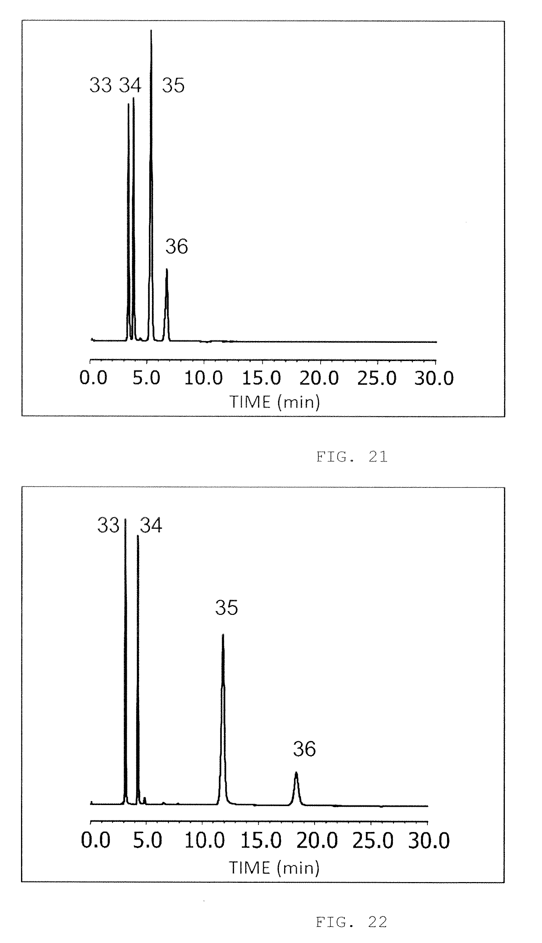

The ability of the Separating Agents 1 and 2 to separate dipeptides and tripeptides consisting of H-Trp-Phe-OH, H-Ala-Leu-OH, H-Glu-Tyr-Glu-OH and H-Glu-Glu-OH was evaluated by HPLC using Columns 1 and 2. The sample solution contained H-Trp-Phe-OH at a concentration of 70 ppm, and the other three samples at a concentration of 290 ppm each. A mixture of 20 mM phosphate buffer (pH = 6.2) and acetonitrile (20 mM H₃PO₄ (pH = 6.2) buffer/CH₃CN = 40/60 (volume ratio)) was used for the mobile phase. The flow rate of the mobile phase was 1.0 mL/min, the column temperature was 40°C, the injected amount of sample solution was 3 µL, and a UV detector (200 nm) was used for the detector. A chromatogram of dipeptide and tripeptide separation with the Separating Agent 1 is shown in FIG. 21, and a chromatogram of dipeptide and tripeptide separation with the Separating Agent 2 is shown in FIG. 22. The elution order was the same for Separating Agents 1 and 2.

### (Separation of Dipeptides and Tripeptides: Comparative Example)

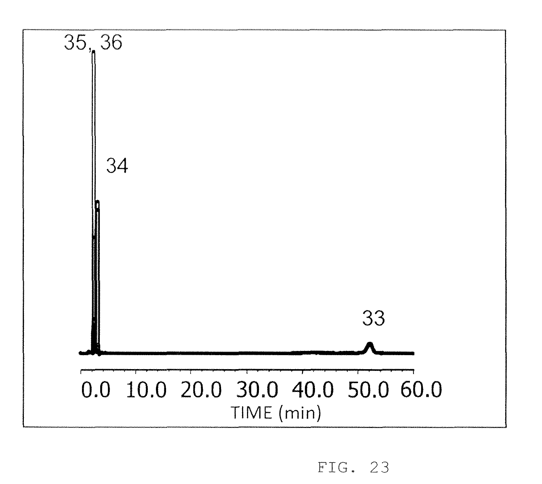

The ability to separate dipeptides and tripeptides consisting of H-Trp-Phe-OH, H-Ala-Leu-OH, H-Glu-Tyr-Glu-OH and H-Glu-Glu-OH with an ODS column was evaluated by HPLC using a commercially available ODS column (trade name: L Column, Chemicals Evaluation and Research Institute, Japan). The sample solution contained H-Trp-Phe-OH at a concentration of 70 ppm, and the other three samples at a concentration of 290 ppm each. A mixture of 20 mM phosphate buffer (pH = 6.2) and acetonitrile (20 mM H₃PO₄ (pH = 6.2) buffer/CH₃CN = 90/10 (volume ratio)) was used for the mobile phase. The flow rate of the mobile phase was 1.0 mL/min, the column temperature was 40°C, the injected amount of sample solution was 3 µL, and a UV detector (200 nm) was used for the detector. A chromatogram of dipeptide and tripeptide separation with the ODS column is shown in FIG. 23. The ODS column is unsuitable for separation of dipeptides and tripeptides.

As is clear from FIGS. 1 to 15 and FIGS. 21 and 22, both the Separating Agents 1 and 2 enabled adequate separation of sugars, nucleic acid compounds, amino acids, water-soluble vitamins, acidic compounds and derivatives thereof, and oligopeptides. In addition, the elution order of the above-mentioned analysis targets is the same for the Separating Agents 1 and 2. Separating Agent 1 demonstrates a shorter total elution time than Separating Agent 2, while Separating Agent 2 demonstrates a greater distance between peaks than the Separating Agent 1. Accordingly, the Separating Agent 1 is expected to be applied to analysis of the above-mentioned analysis targets, while the Separating Agent 2 is expected to be applied to isolation of the above-mentioned analysis targets.

### INDUSTRIAL APPLICABILITY

In such fields as foods, cosmetics, pharmaceuticals and agricultural chemicals, there are numerous hydrophilic or polar compounds that demonstrate effective effects in the body, and efficient separation techniques for compounds not retained by an ODS column are expected to become increasingly sophisticated. Accordingly, the present invention is expected to facilitate improved productivity and faster analysis of sugars, nucleic acid compounds, amino acids, water-soluble vitamins, acidic compounds having physiological activity and derivatives thereof, and oligopeptides in such fields, and is expected to contribute to further progress in these fields.

**EXPLANATION OF REFERENCE NUMERALS**

| | |
|---|---|
| 1 | Glycerol |
| 2 | Xylose |
| 3 | Fructose |
| 4 | Glucose |
| 5 | Sucrose |
| 6 | Maltose |
| 7 | Lactose |
| 8 | Thymine |
| 9 | Uracil |
| 10 | Adenine |
| 11 | Cytosine |
| 12 | Thymidine |
| 13 | Uridine |
| 14 | Adenosine |
| 15 | Cytidine |
| 16 | Guanosine |
| 17 | Nicotinamide |
| 18 | Vitamin B6 |
| 19 | Vitamin B1 |
| 20 | Vitamin B12 |
| 21 | Vitamin C |
| 22 | Tryptophan |
| 23 | Leucine |
| 24 | Proline |
| 25 | Alanine |
| 26 | Glutamic acid |
| 27 | Aspartic acid |
| 28 | Serine |
| 29 | Methyl nicotinate |
| 30 | Nicotinic acid |
| 31 | 6-Hydroxynicotinic acid |
| 32 | 5-Hydroxynicotinic acid |
| 33 | H-Trp-Phe-OH |
| 34 | H-Ala-Leu-OH |
| 35 | H-Glu-Tyr-Glu-OH |
| 36 | H-Glu-Glu-OH |

## Claims

1. A method for separating water-soluble biological substances from a mixture of two or more types of water-soluble biological substances by chromatography using a separating agent composed of a carrier and a polysaccharide bound to the surface of the carrier by chemical bonding.

2. The method according to claim 1, wherein the water-soluble biological substance is one or more types thereof selected from the group consisting of sugars, nucleic acid compounds, amino acids, water-soluble vitamins, acidic compounds having physiological activity and derivatives thereof, and oligopeptides.

3. The method according to claim 2, wherein the polysaccharide is cellulose or amylose.

4. A separating agent for separating water-soluble biological substances, comprising a carrier and a polysaccharide bound to the surface of the carrier by chemical bonding.

5. The separating agent according to claim 4, wherein the water-soluble biological substance is one or more types thereof selected from the group consisting of sugars, nucleic acid compounds, amino acids, water-soluble vitamins, acidic compounds having physiological activity and derivatives thereof, and oligopeptides.

6. The separating agent according to claim 5, wherein the polysaccharide is cellulose or amylose.
